# EUROPEAN PATENT APPLICATION

(11) **EP 2 357 563 A1**
(43) Date of publication of application: **17.08.2011**
(21) Application number: 10172289.0
(22) Date of filing: 03.06.2003
(51) Int. Cl.: G06F 11/30, G06F 12/14, H04L 9/00, H04L 9/32, H04N 5/76

(54) **Broadcast scheduling system and method**

(30) Priority: 03.06.2002 US 385474 P; 03.06.2002 US 385473 P
(62) Divisional of application: 03734385.2
(71) Applicant: Nokia Siemens Networks GmbH & Co. KG, 81541 München (DE)
(72) Inventor: Hersoz, Nathaniel, 98020 Woodway WA (US); Perng, Shyan-ming, 60610 Chicago IL (US)

(57) **Abstract**

Method and system for determining whether a program scheduled to be transmitted will exceed a transmission bandwidth, the system comprising a sorted list of start and end time for each of a plurality of programs to be transmitted, each time in the list having a weight indicating the number of programs to be transmitted at that time, means for inserting a new start and end time into the sorted list, means for setting the weights for the new start time and the new end time, and means for incrementing the weights for the times between the new start and end time.

## Description

### CROSS-REFERENCE TO RELATED APPLICATION

This application claims the benefit of U.S. Provisional Application No. 60/385,474 entitled "METHOD AND SYSTEM FOR STORING MPEG-2 PROGRAMS TO MEDIA AND PLAYBACK," filed on June 3, 2002, and U.S. Provisional Application No. 60/385,473 entitled "METHOD AND SYSTEM FOR RECORDING AND PLAYING BACK PROGRAM CONTENT," filed on June 3, 2002, which are incorporated in their entirety herein.

### BACKGROUND

Storage of television content is a recent feature appearing in consumer electronics devices. The ability to store digital television data for later retrieval (playback) is becoming a highly sought feature among the television viewing audience. Digital television data is typically encoded in accordance with MPEG-2.

The MPEG-2 systems specification ISO/IEC 13818-1 describes the encapsulation of an MPEG-2 program. The specification is hereby incorporated by reference. An MPEG-2 program commonly consists of one video stream of data along with at least one audio stream of data. These individual streams of data are called Packetized Elementary Streams (PES). The MPEG-2 specification allows for 2 different types of program encapsulation: Transport Streams (TS) and Program Streams (PS). With respect to a transport stream, the MPEG-2 systems specification describes a 188 byte transport packet. This packet consists of a 4 byte header and a 184 byte payload. The 184 byte payload may optionally include an adaptation field. Within the adaptation field is an optional Program Clock Reference (PCR). Although the adaptation field is optional within a packet, and likewise the PCR is optional within the adaptation field, the systems specification states that PCR samples are to be delivered to the MPEG-2 decoder with a frequency no less often than every 100 ms (ISO/IEC 13818-1, Appendix D.0.3).

The following table illustrates the contents of an MPEG-2 transport packet.

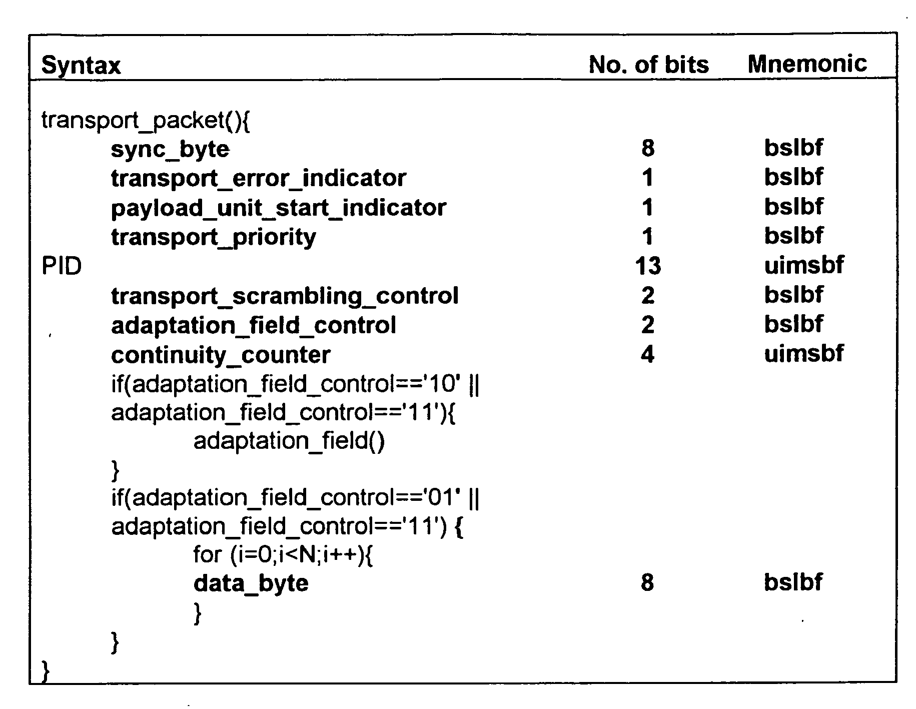

An MPEG-2 program consists of multiple MPEG-2 transport packets sent along a communications channel as an MPEG-2 multiplex. An MPEG-2 multiplex may contain several programs or it may contain zero or one program. When an MPEG-2 multiplex contains several programs, it is referred to as a Multi-Program Transport Stream (MPTS). When the multiplex contains only one MPEG-2 program, it is referred to as a Single Program Transport Stream (SPTS).

The MPEG-2 transport packet header Program Identifier (PID) differentiates program elements within a transport stream. Each program element (e.g., video for a program) contains a unique PID so that the packets associated with that program element can be uniquely identified and sent to the appropriate decoder (which is typically an audio decoder or video decoder).

The MPEG-2 systems specification describes data structures, which are part of the MPEG-2 multiplex stream. These data structures are called the Program Association Table (PAT) and Program Map Table (PMT). The PAT contains a list of programs available within a multiplex, and the PMT contains a list of program elements (typically, audio and video elements), which are part of a single MPEG-2 program.

The following table illustrates the contents of a PAT.

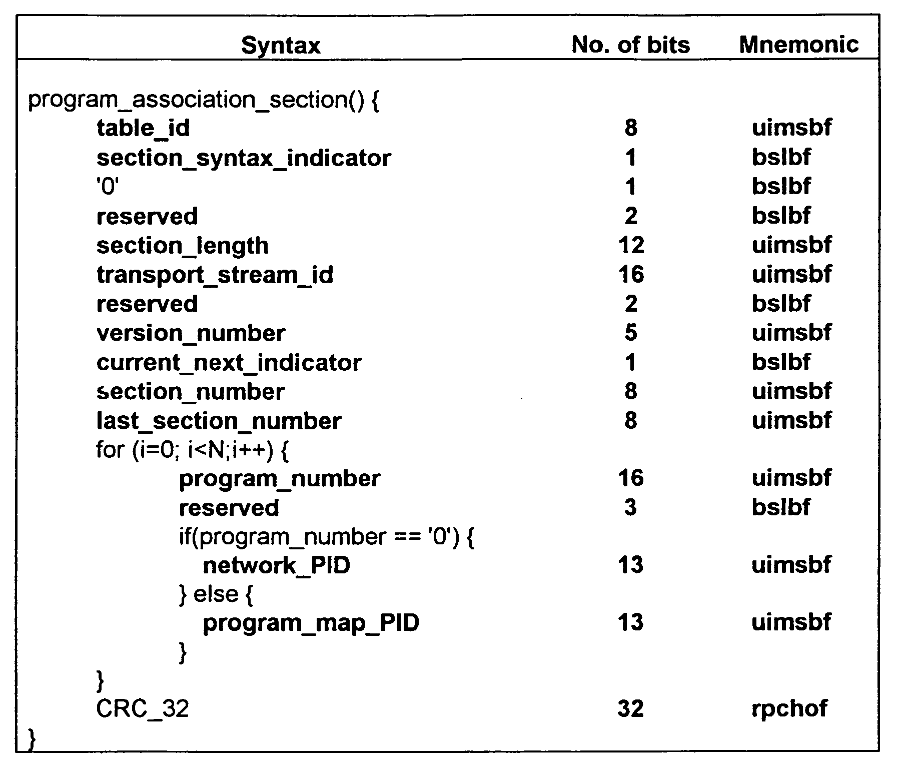

### BRIEF DESCRIPTION OF THE DRAWINGS

Figure 1 is a block diagram illustrating components relating to the personal video recording (PVR) system in one embodiment.
Figure 2 is a block diagram illustrating an MPEG-2 packet and streams in one embodiment.
Figure 3 is a block diagram illustrating the data structures for an MPEG-2 program to PID association.
Figure 4 is a block diagram illustrating an asset data structure in one embodiment.
Figure 5 is a flow diagram illustrating processing of the store program component in one embodiment.
Figure 6 is a flow diagram illustrating the process of retrieving program identifier information for a program.
Figure 7 is a flow diagram illustrating the processing of the store packet component in one embodiment.
Figure 8 is a flow diagram illustrating a component for updating an asset data structure.
Figure 9 is a flow diagram illustrating the discovery of assets in one embodiment.
Figure 10 is a flow diagram illustrating a component that corrects for discontinuities in a program in one embodiment.
Figure 11 is a flow diagram illustrating a component that corrects for discontinuities in a program in an alternate embodiment.
Figure 12 is a flow diagram of a component that checks the number of concurrent streams that are to be received in one embodiment.
Figure 13 is a flow diagram illustrating a component that locates a packet within a program corresponding to a certain time.

### DETAILED DESCRIPTION

Methods and systems for processing streams of media data are provided. In one embodiment, the personal video recording ("PVR") system provides various techniques for efficiently and effectively recording media data. The system may allow for the demultiplexing of a multi-program transport stream ("MPTS") into a single program transport stream ("SPTS"). The SPTS can be recorded without having to also record the other programs of the MPTS. The system also provides a data structure for storing of a program that facilities the rapid positioning at a desired time within a stream. In addition, the system when recording a program processes time discontinuities so that positioning based on time during playback can occur rapidly. The system also allows live television broadcast to be paused indefinitely in way that will not use up all system storage and allow the most recent broadcast to be available for playback. When a program is being recorded, the system uses a file naming convention that allows recorded programs to be rapidly identified at system startup without having to persistently store a mapping of each program to its files. When a user specifies the begin and end times for recording of programs, the system checks the bandwidth of the data communications channel to ensure that the recording of each new program will not result in the bandwidth of the data communications channel being exceeded.

### Demultiplexing MTPS to SPTS

Since it is typically a user's intent to record a single MPEG-2 program and not record an entire MPEG-2 multiplex, the PVR system strips off transport packets not associated with the desired program indicated by the user prior to storing the multiplex to the media. This often results in very large storage efficiency. An MPEG-2 multiplex may contain as many as 10 MPEG-2 programs, and a user is typically interested in recording only one program.

The PVR system allows a client (e.g., a UI program) to specify the appropriate program for storage. The PVR system strips off the MPEG-2 transport packets that do not contain the appropriate PIDs. The PVR system also modifies the PAT to describe the single MPEG-2 program, which is recorded in the multiplex. When modifying the original PAT, the PVR system
Parses the original PAT section
Extracts the appropriate program_map_pid from the MPTS PAT
Rewrites the PAT section data with the following values:
   Modified section_length.
   parsed program_number for the client specified program.
   program_map_PID for client specified program.
   Recalculated CRC_32 and section_length values based on the updated SPTS information.

In one embodiment, the PVR system may not strip off the packets containing the PMTs for the other programs.

### Storing the content into manageable size blocks

Due to the very large size of MPEG-2 programs, the PVR system stores the recorded content into manageable assets. In one embodiment, the stored content, referred to as a PVR asset, is arranged into a linked list of arbitrarily sized PVR files. When the file size is fixed to a relatively small number (e.g., 128 MB), the operating system (OS) does not need to support file sizes larger than 2 GB. The small file size also allows deletion of relatively small portions of the stored content without affecting other portions of the stored content. In one embodiment, the PVR system stores the content aligned to MPEG-2 transport packet boundaries. Thus, the files are a multiple of 188 bytes. This allows for easy and efficient MPEG-2 transport packet framing from the stored content.

### Timestamp structure

As mentioned in the background, the MPEG-2 transport packets contain timing information in the form of PCRs carried in the adaptation field of the transport packets. This timestamp is based upon a 90 KHz "base" and a 27 MHz extension. This gives each time stamped packet 37 nanosecond (1/27MHz) precision. Because of this very high accuracy timebase and because of the 10 PCR samples per second minimum rate, the PVR system calculates the transport multiplex data rate for the transport stream and the expected time stamp for all packets, which do not contain a time stamp. The PVR system can make these calculations as soon as it has received 2 PCRs, which will be within 200 mS of stream reception. During the recording process, the PVR system maintains a PCR record for the first and last PCRs found in each PVR file. As the stream is being recorded, the PVR system updates the last PCR entry as new PCR data is acquired.

### Timebase discontinuities encountered while recording

The PVR system removes timebase discontinuities from the recorded stream. Time base discontinuities are an acceptable characteristic of the MPEG-2 syntax. However, the discontinuities may cause a seek function during playback to be complicated. Therefore, the PVR system restamps the time base for a time discontinuous stream to simplify the seek algorithm when the stream is played back.

To maintain a time continuous transport stream, the PVR system calculates a time continuous PCR and PTS values. The transport packet rate can be calculated as (assuming a constant bit rate):
PACKET_RATE = N_PACKETS / (PCR[LAST] - PCR[FIRST])

Because a highly accurate (37 nS) transport rate can be calculated, the PVR system can determine a transport time discontinuity and the degree (difference) of discontinuity. By calculating the difference between the PCR delivered and that expected, the PVR system can calculate a time base restamping constant. This time base restamping constant is maintained during the recording process. The PVR system recalculates the time base restamping constant in real time as new discontinuities are encountered.

When a discontinuity is encountered and a time base restamping constant has been calculated, then the PVR system recalculates the PCRs and PTSs following the discontinuity by adding the time restamping constant to the original PCR. The PVR system stores this recalculated time stamp to disk in the PVR file. Additionally, the PVR system sets the adaptation field element discontinuity_indicator to '1' in order to notify the decoder that a time discontinuity occurred during the record process.

### Playback

Playback of the stored content nominally begins with the head of list of files recorded by the PVR system. The playback, however, might commence prior to the entire program being recorded. When the end of one file is reached, then, the next file in the linked list is opened as read-only and read into the media (MPEG) decoder. The user interface can be notified during many events, for example, recording start, recording complete, recording failed, and end of PVR asset playback.

### Pause/LiveTV

The PVR system supports pausing live television. When the user is recording the same program as the one the user is currently viewing, then the user may pause the television while the recording is still in progress. In this mode, it may be useful to limit the total recorded time allocated to the record process. Since the recorded asset is maintained as a linked list of files, and PCRs for the beginning and end of each stored file are maintained, the PVR system can calculate the total asset recorded time and the time occupied by each file. When the time of recording exceeds a specified amount of time (either defined by a system parameter or by the user), then the PVR system can delete the head (first) recorded file from the program store and the head pointer moved to the next file at the head of the list. In this way, a feature like Pause/LiveTV can be implemented in a way that will not use up all available disk space during a paused program.

### PVR asset discovery, persistence

The PVR system allows stored recording sessions, aka PVR assets, to be recovered when the systems has been rebooted from a power cycle event. Although the programs are stored persistently, the data structures linking the files are not stored persistently in one embodiment. To enable this feature, the PVR system uses a naming convention for the asset files that preserves the asset name and the order in which files were recorded. The file name for each recorded file in the asset list is named:
"<asset_name>-<seqno>"
where:
asset_name is the client specified asset name.
seqno is the sequence number of the recorded file starting with 001
and incrementing to 002, 003, as the asset is recorded.

Therefore, when an asset named "default" is specified by a client application for recording, a list of files named:
/media/default-001
/media/default-002
/media/default-003
...
/media/default-009
...
is created as the recording process progresses.

By recording into a specific partition, the PVR system guards against file corruption of other media partitions that may contain program files, user settings, etc. in the event of partition overflow. Additionally, the media partition is mounted read-write, whereas other partitions may be mounted as read-only.

When an asset is discovered on boot, the first and last PCR for the file is sought and preserved in the non-persistent data structures. This procedure is very fast as only the first and last PCR were sought, decoded, and stored in the program data structures. If the PCR discontinuities had not been corrected during the record process, then this discovery process would be much more lengthy and complicated.

Because of the PCR continuity, there is no need to maintain a list of PCRs within the file - a pair of PCRs for every time continuous segment of transport stream. The PVR system need only store two PCRs per recorded file.

A catalogue of assets is supported by an PVR library API to the client program. This catalogue allows the client program to know what PVR assets were discovered at boot and being maintained by the PVR library at any time.

### Multiple record sessions

The mechanism by which recordings are made is only limited by:
1. The bandwidth available from content supplier (typically a head end or central office) to the set top box or customer premises equipment.
2. The available free hard disk space.

### Stream Concurrency

When a program is selected for recording the PVR system, the available bandwidth is taken into account to determine if the recording can proceed. The bandwidth is determined periodically in real time by sending data of properly chosen size to a network server at a known location and measuring the elapsed time from sending the data to receiving the server acknowledgement. The data size is chosen to be large enough so the server response time can be ignored, while small enough so that its impact on network load is minimal.

The PVR system uses this bandwidth information in conjunction with the information of previously scheduled recordings to determine whether there will be any time interval in which the maximum bandwidth may be exceeded and thus the proposed recording cannot be allowed. The algorithm to determine number of simultaneous recordings in a time interval is outlined below:

Each recording adds two points to a time line. The collection of points partition the time line into intervals which are assigned weights according to how many streams are concurrently being recorded in the interval. Thus, after the first recording schedule, the collection consists of {t_1, t_2}, with the interval [t1, t2] assigned weight 1. After N recording scheduled, the collection consists of {t_1, .. ,t_2N}, each interval [t_i, t_i+1] is assigned a weight w_i. For the N+1th recording, with begin and end time t_begin, t_end, the PVR system updates the t_i's and the w_i's as follows:
find t_j, t_k such that t_j < t_begin < t_j+1 and t_k < t_end < t_k+1
{t_1,.., t_2N+2} can now be assigned as {t_1, .. , t_j, t_begin, t_j+1, .. , t_k, t_end, t_k+1, .. , t_2N}
{w_1, .. , w_2N+2} := {w_1, .. , w_j, (w_j) + 1,( w_j+1) + 1, .. , (w_k) + 1, (w_k+1)+1, w_k+1, .. , w_2N}.

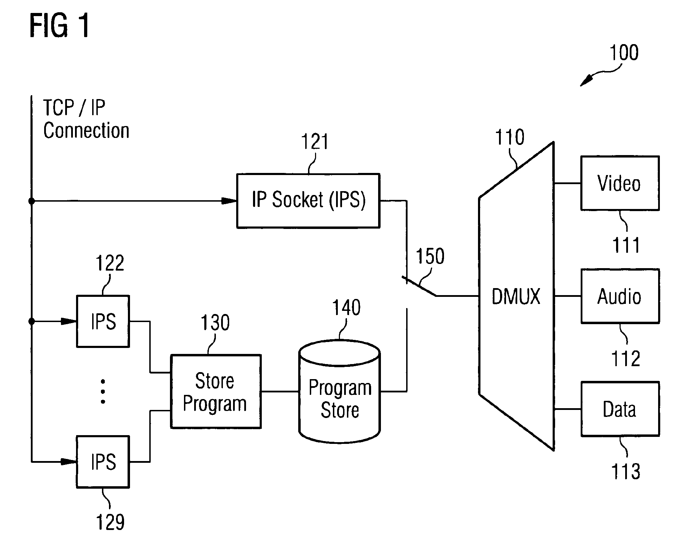

Figure 1 is a block diagram illustrating components relating to the personal video recording (PVR) system in one embodiment. The components include a demultiplexer 110, a video processor 111, an audio processor 112, and a data processor 113. The demultiplexer receives an MPEG-2 stream via switch 150 and sends video, audio, and data packets to the appropriate processor. The streams may be identified by the demultiplexer by a file handle or other file system description for a file or stream. The MPEG-2 stream is provided via Internet protocol socket 121 or program store 140. The MPEG-2 streams are provided via the TCP/IP connection. The "live" stream is processed via IP socket 121. Streams that may be recorded are sent via IP sockets 122-129. The store program component 130 processes the programs received via IP sockets 121-129 and stores them in the program store 140 as appropriate. The program store may receive instructions on which programs to store from a user or another application program (not shown). In addition, a retrieve program component (not shown) provides the stored program content to the demultiplexer as appropriate. The retrieve program and the store program component may interact with a UI component that implement a VCR-type interface.

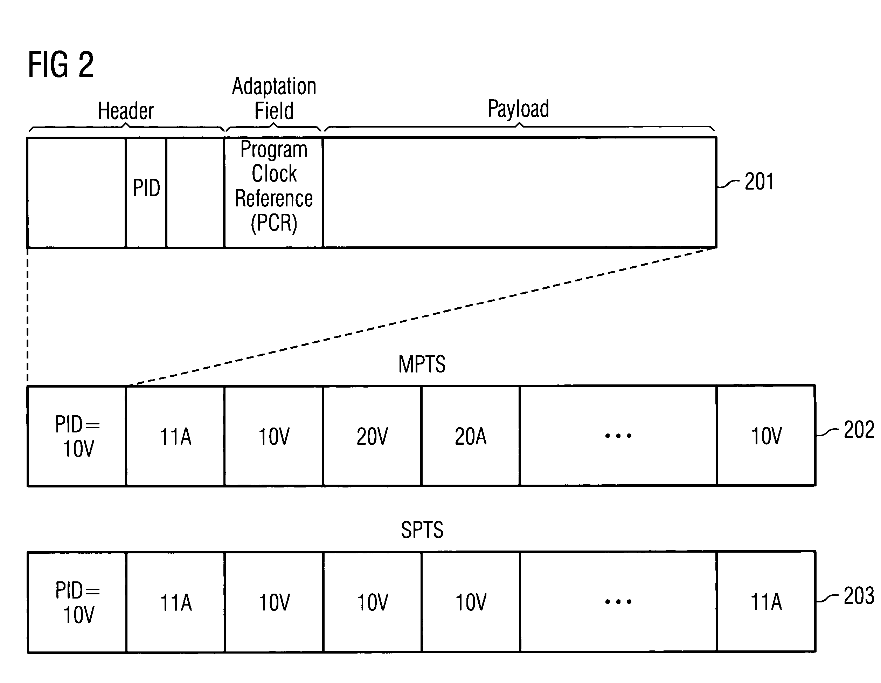

Figure 2 is a block diagram illustrating an MPEG-2 packet and streams in one embodiment. As discussed above, an MPEG-2 packet 201 contains 188 bytes that include a header, an adaptation field, and a payload. The header includes a program identifier (PID) that identifies the program to which the packet belongs. The adaptation field may include a program clock reference (PCR) that specifies the time associated with the packet. The payload contains the data of the packet. Multiprogram transport stream (MPTS) 202 contains the packets for multiple programs. In this example, the packets 10V and 11 A corresponds to the video and audio packets of one program, and the packets 20V and 21 A corresponds to the video and audio packets of the other program. The PVR system extracts a single program from a multiprogram transport stream and represents it as a single program transport stream (SPTS) 203. In this example, the single program transport stream contains only the data packets for one of the programs.

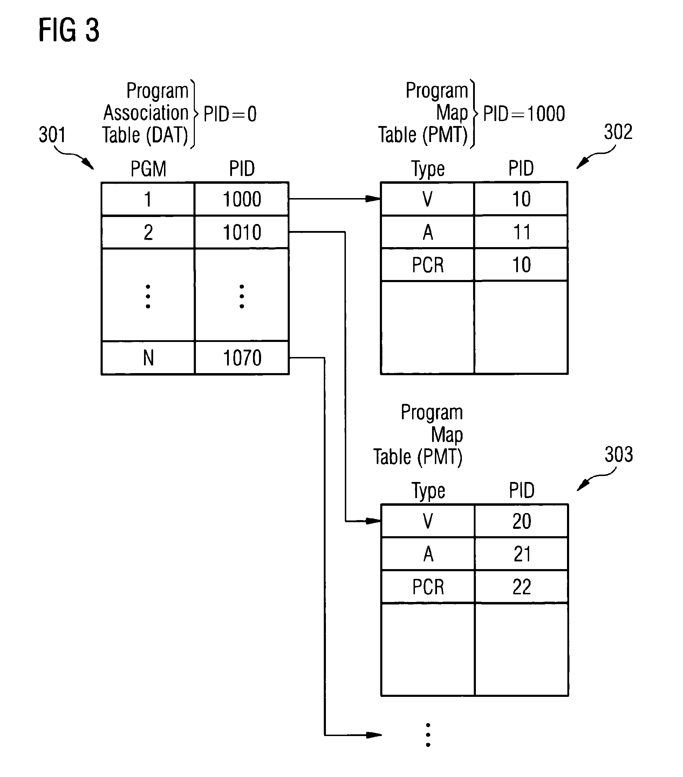

Figure 3 is a block diagram illustrating the data structures for an MPEG-2 program to PID association. Each multiprogram or single program transport stream includes a program association table (PAT) 301 stored in a packet with a program identifier of 0. The program association table contains an entry for each program and identifies the program identifier of another packet that contains the program map table (PMT) for that program. In this example, the program association table indicates that program 1 has a program identifier of 1000 for its program map table. The packet with the program identifier of 1000 contains a program map table 302 with an entry for each element in that program's stream. Each entry identifies the program identifier for that element. For example, as indicated by program map table 302, the video packets for the program have a program identifier of 10. The entry for the PCR element indicates this program has its PCR values stored within the video packets because its program identifier is the same as the program identifier for the video packets. In contrast, the PCR values for the program map table 303 are stored in a separate packet from the video.

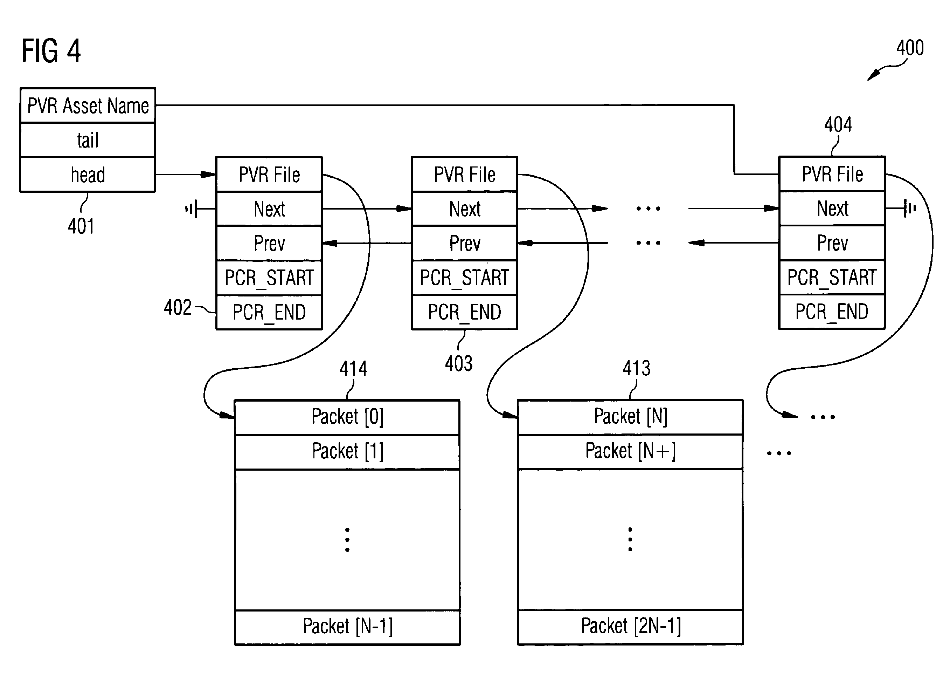

Figure 4 is a block diagram illustrating an asset data structure in one embodiment. One skilled in the art would appreciate that many different organizations of data structures may be used alternatively. The asset data structure includes an asset header 401, PVR file data structures 402-404, and PVR files 412-413. The asset header and the PVR file data structures may be stored in volatile memory, that is stored nonpersistently. The PVR system may be implemented on a conventional computer or may be implemented on a set-top box. The asset header contains the name of the asset (e.g., program) and a pointer to a doubly linked list of PVR file data structures. Each PVR file data structure corresponds to one of PVR file. A PVR file data structure contains a pointer to the PVR file, a next and previous pointer linking it into the doubly linked list of PVR file data structures, and a PCR start and end time. As the PVR system receives packets of information to be recorded, it sets of the PCR start time to the time associated with the first packet of the PVR file and sets the PCR end time to the most recently received packet of the PVR file. Thus, the PCR end time may change as each packet is received. Alternatively, the PCR end time might only change whenever a new PCR value is received. The PCR value may be calculated as discussed above for each packet received.

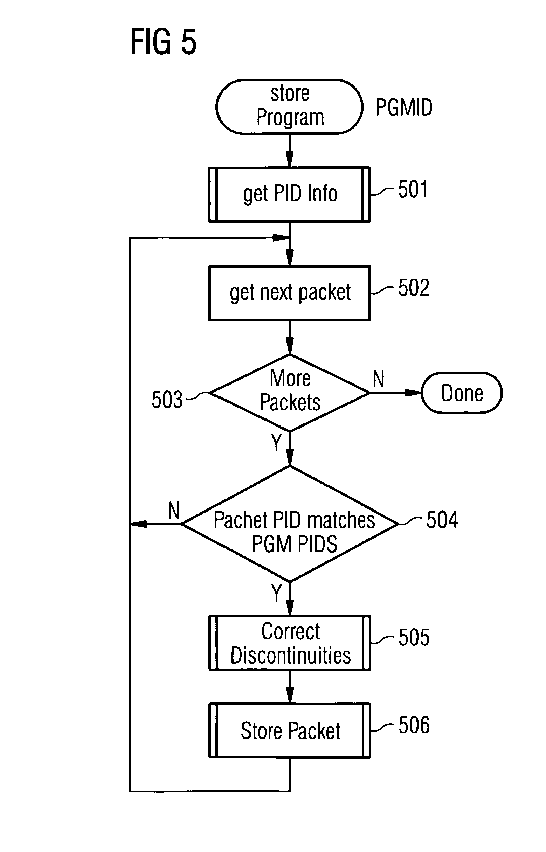

Figure 5 is a flow diagram illustrating the processing of the store program component in one embodiment. The component may be provided with a program name of a program to be recorded from a multiprogram transport stream. In block 501, the component invokes a component to retrieve the program identifiers of the elements associated with the program name. In blocks 502-506, the component loops processing each packet in the stream. In block 502, the component receives the next packet in the multi-program transport stream. In decision block 503, if there are more packets in the stream and a termination condition has not occurred, then the component continues at block 504, else the component completes. In decision block 504, if the program identifier of the received packet matches a program identifier for the program to be recorded, then the component continues at block 505, else the component loops to block 502 to retrieve the next packet. In block 505, the component invokes a component to correct the packet information. In one embodiment, the correction of the packet information includes the calculating of an anticipated PCR value for each packet and adjusting the packet's PCR value when a discontinuity is discovered. In block 506, the component invokes a component to store the packet and then loops to block 502 to retrieve the next packet.

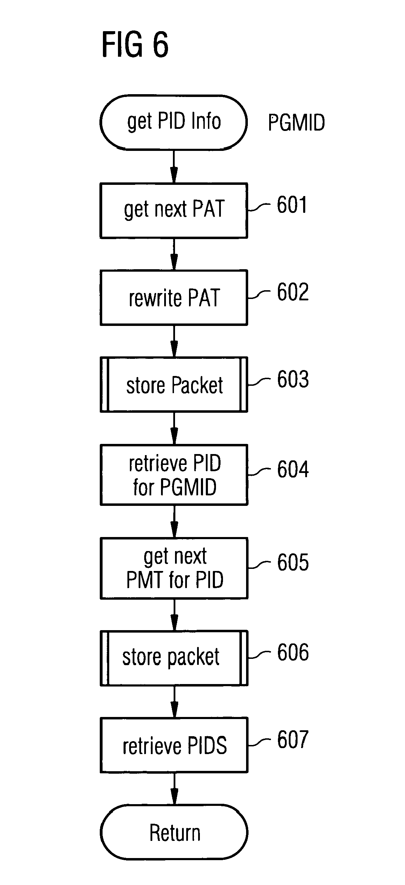

Figure 6 is a flow diagram illustrating the process of retrieving program identifier information for a program. This component may initially create an asset header. In block 601, the component retrieves the next program association table from the stream. In block 602, the component rewrites the program association table. This rewriting includes indicating that there is only one program map table, calculating a length indicator, and calculating a CRC. In block 603, the component invokes a component to store the packet. In block 604, the component retrieves the program identifier for the packet that contains the program map table from the program association table for the program. In block 605, the component retrieves the next program map table contained within a packet with the retrieved program identifier. In block 606, the component invokes a component to store the packet that contains the program map table. In block 607, the component retrieves the program identifiers from the program map table. These retrieved program identifiers indicate the packets of elements that are to be included in that recorded stream. The component then returns the program identifiers.

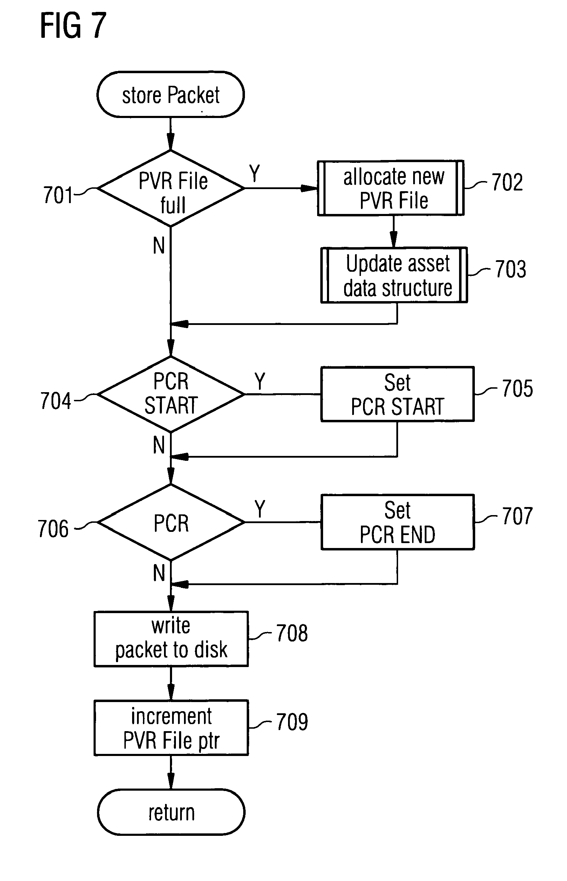

Figure 7 is a flow diagram illustrating the processing of the store packet component in one embodiment. This component allocates PVR files and creates the asset data structures. In decision block 701, if the current PVR file is full (or an initial one needs to be created), then the component continues at block 702, else the component continues at block 704. In block 702, the component allocates a new PVR file and initializes a pointer to the first location in the PVR file. In block 703, the component invokes a component to update the asset data structure for the program. In decision block 704, if the packet corresponds to a PCR start, then the component continues at block 705, else the component continues at block 706. In block 705, the component sets the PCR start in the PVR file data structure and then continues at block 706. In decision block 706, if the packet contains a PCR value, then the component continues at block 707, else the component continues at block 708. In block 707, the component sets the PCR end in the PVR file data structure and then continues at block 708. In block 708, the component writes the packet to the program store. In block 709, the component increments the pointer into the PVR file and then returns.

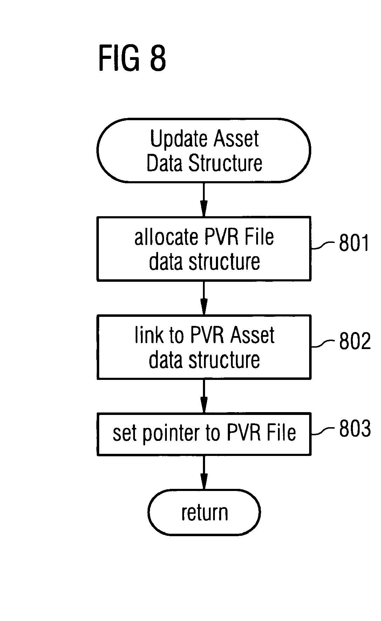

Figure 8 is a flow diagram illustrating a component for updating an asset data structure. In block 801, the component allocates a PVR file data structure. In block 802, the component links the PVR file data structure to the doubly linked list of the asset data structure. In block 803, the component sets the pointer in that PVR file data structure to point to the PVR file and then returns.

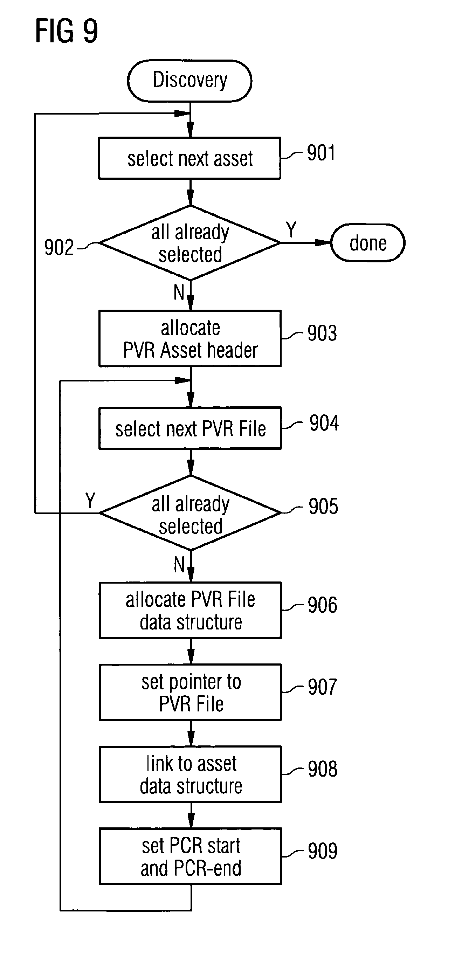

Figure 9 is a flow diagram illustrating the discovery of assets in one embodiment. The discovery process may be used when the PVR system is first powered up to identify the assets that have been recorded in the program store. In blocks 901-909, the component loops selecting each asset that has been recorded in the program store. In block 901, the component selects the next asset by scanning the names of the PVR files that are stored in the program store. In decision block 902, if all the assets have already been selected, then the component completes, else the component continues at block 903. In block 903, the component allocates an asset header. In blocks 904-909, the component loops selecting each PVR file for the selected asset. In block 904, the component selects the next PVR file for the selected asset. In decision block 905, if all the PVR files have already been selected, then the component loops to block 901 to select the next asset, else the component continues at block 906. In block 906, the component allocates a PVR file data structure for the selected PVR file. In block 907, the component sets the pointer in the PVR file data structure to point to the selected PVR file. In block 908, the component links the PVR file data structure to the asset data structure. In block 909, the component sets the PCR start and PCR end in the PVR file data structure. The component may calculate the PCR start and PCR end times by scanning from the front of the PVR file for the start time and scanning from the end of the PVR file for the end time. The component then loops to block 904 to select the next PVR file for the selected asset.

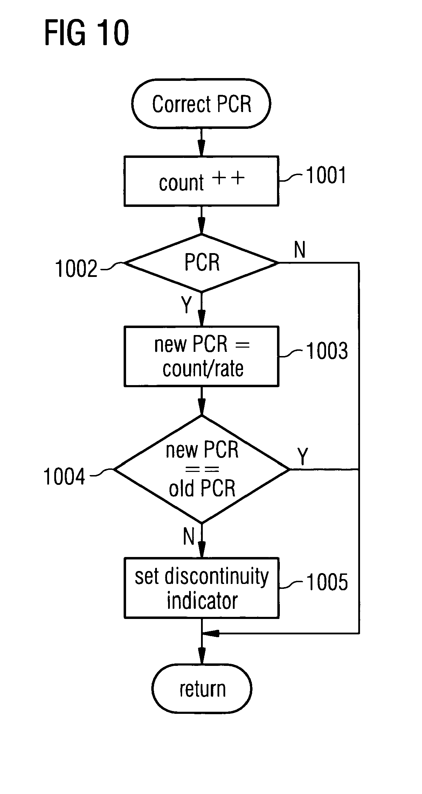

Figure 10 is a flow diagram illustrating a component that corrects for discontinuities in a program in one embodiment. This component replaces each PCR with a new PCR corresponding to the number of packets that have been received divided by the rate of packet transmission. For example, if 1000 packets have been received and the rate is 100 packets per second, then the PCR for the 1000th packet would be 10 seconds. This component is invoked each time a packet is received. In block 1001, the component increments the count of packets. In decision block 1002, if the packet contains a PCR, then the component continues at block 1003, else the component returns. In block 1003, the component sets the PCR for the packet to the count divided by the packet rate. In decision block 1004, if the old PCR is the same as the new PCR, then the component returns, else the component sets a discontinuity indicator of the packet and then returns. In one embodiment, the component might set a discontinuity indicator only once when a discontinuity is first detected.

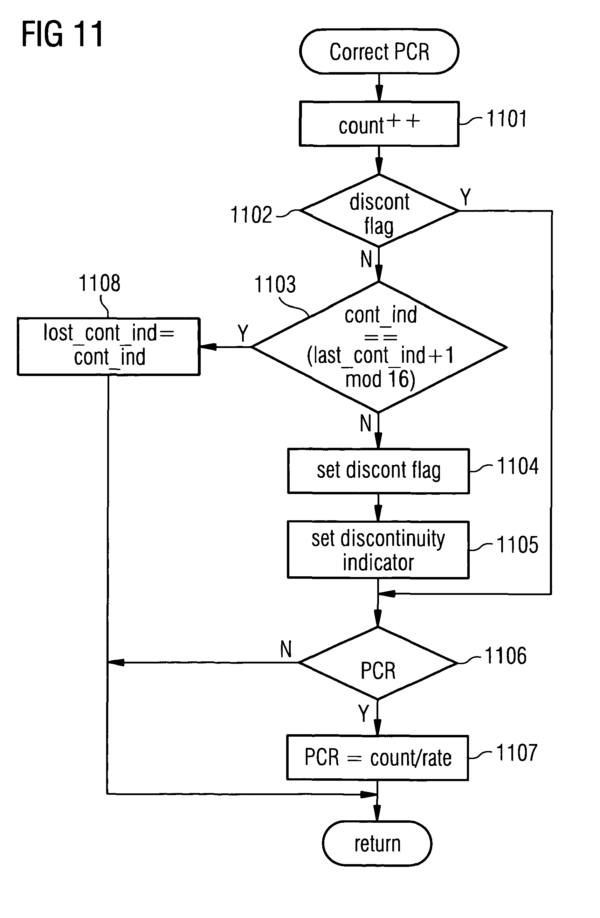

Figure 11 is a flow diagram illustrating a component that corrects for discontinuities in a program in an alternate embodiment. This component starts replacing PCRs only after the continuity indicator of a packet indicates that a discontinuity has occurred. A discontinuity may occur, for example, when an advertisement is included in a stream. When a discontinuity is detected, the component sets the discontinuity indicator of the packet and sets a flag so that the PCRs of subsequent packets can be corrected. This component is invoked each time a packet is received. In block 1101, the component increments the count of packets. In decision block 1102, if the discontinuity flag has been set, then the component continues at block 1106, else the component continues at block 1103. In decision block 1103, if the continuity indicator of the packet is the next in sequence, then the component continues at block 1108, else the component continues at block 1104. In one embodiment, a packet is next in sequence when its continuity indicator is equal to modulo 16 of the continuity indicator of the last packet plus 1. In block 1104, the component set the discontinuity flag. In block 1105, the component sets the discontinuity indicator of the packet. In decision block 1106, if the packet contains a PCR, then the component continues at block 1107, else the component returns. In block 1107, the component sets the PCR for the packet to the count divided by the packet rate and then returns. In block 1108, the component sets the last continuity indicator to the continuity indicator of the packet and then returns.

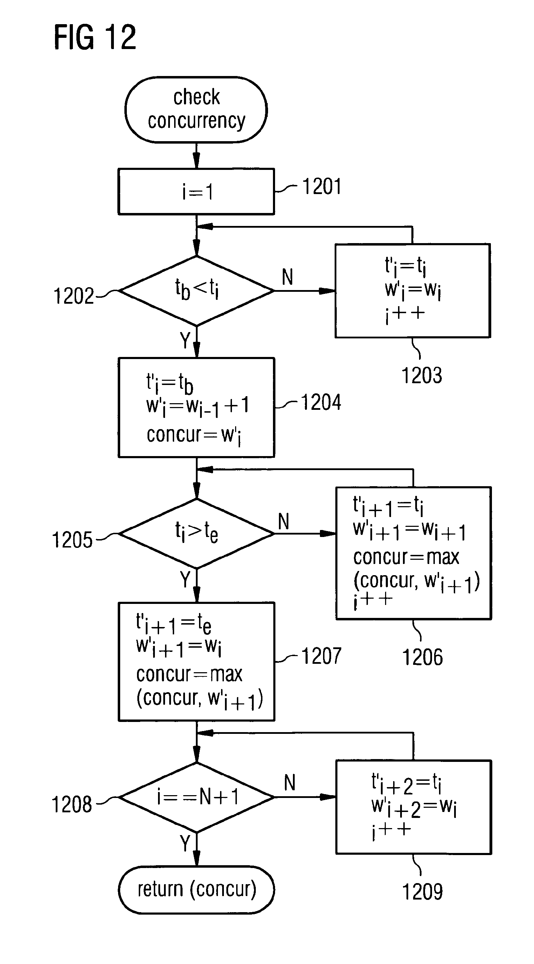

Figure 12 is a flow diagram of a component that checks the number of concurrent streams that are to be received in one embodiment. The component maintains an array tᵢ of the sorted begin and end times at which each stream is to be received and a parallel array wᵢ of the number of streams ("weight") that will be received concurrently at the corresponding time tᵢ. In one embodiment, the array tᵢ is initialized to contain a stream with start time of zero and an end time of the maximum possible and array wᵢ is initialized to 0 for both entries. This initialization allows for boundary conditions to be handled without special detection. The component is passed t_{b} representing the begin time of a new stream and tₑ representing the ending time of the new stream. The component returns the maximum number concurrent streams that would be received during the new stream. The component also maintains arrays t'ᵢ and w'ᵢ corresponding to the new arrays after the new stream is inserted. In block 1201, the component sets index i to the first entry in array t. In blocks 1202-1203, the component loops processing each time that is less than t_{b}. In decision block 1202, if t_{b} is less than tᵢ, then the component is to insert t_{b} into array t' at index i and continues at block 1204, else the component continues at block 1203. In block 1203, the component sets t'ᵢ to tᵢ, w'ᵢ to wᵢ, increments i, and loops to block 1202. In block 1204, the component stores the begin time information by setting t'ᵢ to t_{b}, w'ᵢ to w_{¡-1}+1, and sets the variable concur to w'ᵢ. The variable concur tracks the maximum number of concurrent streams during the period of the new stream. In block 1205-1206, the component loops setting the times and number for streams for the times during the period of the new stream. In decision block 1205, if tᵢ is greater than tₑ, then the component is to insert tₑ at the next position within t and continues at block 1207, else the component continues at block 1206. In block 1206, the component sets t'ᵢ₊₁ and w'ᵢ₊₁, sets the variable concur, and increments i and loops to block 1205. In block 1207, the component stores the end time information by setting t'ᵢ₊₁ to tₑ, w'_{¡+1} to wᵢ, and the variable concur. In blocks 1208-1209, the component loops setting the times and number of streams after tₑ. In block 1208, if i is greater than the number of entries in t, then the component returns the variable concur, else the component continues at block 1209. In block 1209, the component sets t'ᵢ₊₂ and w'ᵢ₊₂ and increments i and then loops to block 1208. One skilled in the art will appreciate that an analogous component could be used to remove a stream from the set of streams to be transmitted. Also, this component could additionally check to see if the variable concur exceeds a maximum and if so, return an error. Otherwise, the component could set arrays t and w to arrays t' and w' before returning.

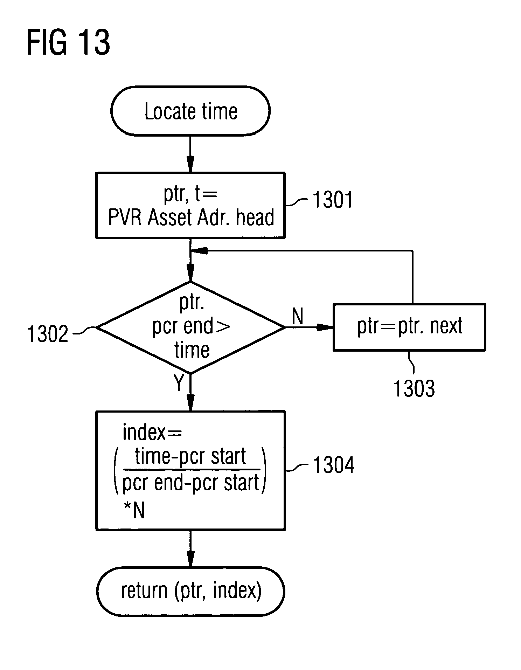

Figure 13 is a flow diagram illustrating a component that locates a packet within a program corresponding to a certain time. In one embodiment, the time is an absolute PCR time from the PCR start of the program. Alternatively, the time could be an offset from PCR start. In block 1301, the component selects the first PVR data structure in the doubly linked list of data structures. In decision block 1302, if the time PCR end time is greater than the time, then the packet is in the PVR file associated with this PVR data structure and the component continues at block 1304, else the component continues at block 1303. In block 1303, the component selects the next PVR data structure and loops to block 1302. In block 1304, the component sets the index of the packet within the PVR file that corresponds to the time to the percentage of time to the total time of the PVR file times the number of packets in the PVR file. The component then returns an indicator of the PVR file and the index. In an alternate embodiment, the component might initially determine whether the time was closer to the start or end of the program and search the doubly linked list in the forward or backward direction.

The PVR system and servers may include a central processing unit, memory, input devices (e.g., keyboard and pointing devices), output devices (e.g., display devices), and storage devices (e.g., disk drives). The memory and storage devices are computer-readable media that may contain instructions that implement the PVR system. In addition, the data structures and message structures may be stored or transmitted via a data transmission medium, such as a signal on a communication link. Various communications links may be used, such as the Internet, a local area network, a wide area network, or a point-to-point dial-up connection.

From the foregoing, it will be appreciated that although specific embodiments of the PVR system have been described for purposes of illustration, various modifications may be made without deviating from the spirit and the scope of invention. Accordingly, the invention is not limited except by the following claims.

## Claims

1. A method in a computer system for determining whether a program scheduled to be transmitted will exceed a transmission bandwidth, the method comprising:
providing a sorted list of start and end time for each of a plurality of programs to be transmitted, each time in the list having a weight indicating the number programs to be transmitted at that time;
receiving a start and end time for a new program to be transmitted;
inserting the received start and end time into the sorted list;
setting the weight for the received start time to one more than the weight of the previous time in the list;
setting the weight for the received end time to the weight of the next time in the list; and
incrementing the weights for the times between the start and end time.

2. The method of claim 1 including when a weight exceeds a maximum, preventing the transmission of the new program.

3. The method of claim 1 wherein the programs are to be recorded.

4. The method of claim 1 including
receiving a start and end time for a program to be removed from the list ;
removing from the list the received start and end time of the program to be removed; and
decrementing the weights for the times between the start and the end time of the program to be removed.

5. A system for determining whether a program scheduled to be transmitted will exceed a transmission bandwidth comprising:
a sorted list of start and end time for each of a plurality of programs to be transmitted, each time in the list having a weight indicating the number programs to be transmitted at that time;
means for inserting a new start and end time into the sorted list ;
means for setting the weights for the new start time and the new end time; and
means for incrementing the weights for the times between the new start and end time.

6. The system of claim 5 including means for preventing the transmission of the new program when a weight exceeds a maximum.

7. The system of claim 5 wherein the programs are to be recorded.

8. The system of claim 5 including
means for removing from the list a start and end time of the program to be removed from the list ; and
means for decrementing the weights for the times between the start and the end time of the program to be removed.
